# EUROPEAN PATENT APPLICATION

(11) **EP 1 903 831 A2**
(43) Date of publication of application: **26.03.2008**
(21) Application number: 07018543.4
(22) Date of filing: 21.09.2007
(51) Int. Cl.: H04Q 9/00

(54) **Method and system for measuring physical quantities**

(30) Priority: 22.09.2006 SE 0601964
(71) Applicant: TNT-Elektronik AB, 783 90 Säter (SE)
(72) Inventor: Platbardis, Janis, 783 90 Säter (SE)
(74) Representative: Lundquist, Lars-Olof

(57) **Abstract**

A method in a system with sensors (S1-Sn) and receivers (M1-Mn) for receiving messages from the sensors. According to the invention, at least one of the receivers (M1) is prepared for accepting messages from at least one of the sensors (S1) by rendering the receiver susceptible to a request from the sensor to be registered as a sensor from which the receiver accepts messages, during a time slot (Tm0-Tm1), which has a limited duration in time and is automatically closed after a predetermined period of time, after which time slot the receiver no longer accepts such a request, whereupon the sensor is caused to send said request, comprising an identity code unique to the sensor, to the receiver within the time slot, after which the receiver registers the sensor, when receiving said request, as a sensor from which the receiver accepts messages. The invention also relates to a system for realizing the method.

## Description

The present invention relates to a method comprising a plurality of sensors, on one hand, for measuring at least one physical quantity and wireless forwarding of measurement values in the form of wireless messages, and a plurality of receivers, on the other hand, for receiving these wireless messages. The invention also relates to a system for such a method.

The present invention particularly relates to a method and a system for monitoring the temperature of refrigerated and frozen foodstuff in grocery stores, warehouses and restaurants.

When manufacturing sensors provided with radio transmitters for measuring and forwarding measured physical quantities, such as for example, temperature, humidity, light-intensity, voltage or current consumption, it is common that each sensor is provided with a unique identity code, which normally is called RFID (Radio Frequency Identity). The RFID, which also can be synonymous with a serial number unique to the sensor, is applied onto the sensor in the form of a manually readable or machine-readable label or the like and accompanies each message which is sent out by the sensor.

In systems comprising a plurality of sensors and one or a plurality of receivers, the RFIDs of the sensors are used for registering sensors in the receivers. In this connection, registration of a sensor in a receiver means that the sensor is logically connected or linked to the receiver, so that the receiver accepts messages from this particular sensor. This connection can be done, for instance, in such a way that the RFID of the sensor is entered into a table in the receiver, said table constituting a list of sensors from which the receiver should accept messages for further processing.

Accordingly, a registration establishes a logical connection or link between the sensor and the receiver, wherein the receiver accepts a message from a sensor only if the sensor is registered in the receiver. If the message originates from a sensor which is not registered in the receiver, the receiver ignores the message. If the receiver accepts the message, the receiver also uses the RFID in order to determine which sensor the received message originates from.

In practice, however, end-users of sensor systems are denied the possibility to freely register and deregister sensors, but have to order such assistance, for a charge, from a service organization.

A common method when registering a sensor in a receiver is that a specially trained operator manually enters the FRID of the sensor into the table of the receiver, for example by means of a push-button set, keyboard, handheld computer, terminal, or the like. In order to deregister a sensor, to the extent that it is possible at all, entries which remove the RFID of the sensor from the table have to be done in a similar way.

EP 1 336 512 A1 describes a more automated method for registering a transmitter-equipped sensor with a receiver. According to the method, the receiver is switched manually from an observation mode to a registration mode. A control tool is then brought into the vicinity of the sensor, whereupon the control tool is caused to transmit an instruction signal to the sensor. As a response to the instruction signal, the sensor transmits a message, containing the ID code of the transmitter, to the receiver, whereupon the receiver receives and registers the ID code in its table of registered sensors. Finally, the receiver is manually switched from the registration mode back to the observation mode, after which the receiver is ready to receive and process messages from the sensor.

The problem with the method according to EP 1 336 512 A1 is that the manual switching from the observation mode to the registration mode and then back to the observation mode again is complicated.

To solve this problem by means of configuring the receiver in such a way that sensors always can be registered independently of the mode of the receiver, i.e. without switching the receiver to a registration mode, will on the other hand result in other problems. If the receiver receives and registers all RFIDs it discovers, it is impossible to prevent registration of sensors which are not desired to be registered in the receiver. This is a problem particularly in systems where several sensors and receivers are present and where only a subset of the sensors should be connected to only a subset of the receivers. One example of such a system is a temperature monitoring system for monitoring the temperature of refrigerated or frozen foodstuff in grocery stores, warehouses and restaurants.

In two neighbouring systems, for example in two stores in a shopping mall, where the stores are so close to each other that the respective systems of the stores are in radio contact with each other, there is an obvious need to separate the systems from each other. Messages from sensors in one store should only be accepted by receivers in that store, and messages from sensors in the other store should only be accepted by receivers in the other store. This problem is solved by registering the sensors in each system only with receivers in the own system.

Also within one and the same system, however, there might be a need to group sensors and receivers in such a way that only a subset of the sensors are connected to only a subset of the receivers. This need is particularly evident in stores having large refrigerating or freezing departments. For example, there might be a need to let sensors in one part of the store be connected to one receiver, and to let sensors in another part of the store be connected to another receiver.

Connected subsystems also fill an important role in so called repeating receivers. A repeating receiver, or a so called repeater, is a receiver which comprises a radio transmitter arranged to retransmit an incoming message after a certain small time delay. The intention is to increase the range of the system by letting the repeater pick up weak messages and retransmit them in a reamplified state. In systems for temperature monitoring, some sensors can for example be located inside cold storage and freezer storage rooms. These rooms are generally metal covered and have tight doors, and wireless signals from the inside of the cold storage or freezer storage room will therefore be very weak. In many cases, the signal coming out from the cold storage and freezer storage room is too weak to reach all the way to the intended receiver. This problem can be solved by placing a repeater outside each cold storage and freezer storage room. The repeater picks up the weak messages from the sensors in the cold storage and freezer storage room and retransmits these messages with full strength, so that they reach the intended receiver.

If a repeater forwards all the messages it receives, whether needed or not, for example messages from sensors located outside the cold storage and freezer storage rooms, a number of problems will arise. There is, for example, a risk of so-called "ping-pong effects" in the system, wherein a plurality of repeaters send messages back and forth in the system. In one and the same radio channel, there is only a limited time to transmit signals. For this reason, it is important not to unnecessarily occupy radio channel space. If the number of signals transmitted per unit of time becomes too large, the transmitting units, i.e. the sensors and the repeaters, risk to speak all at once, which results in the signal transmission capacity of the system being reduced, i.e. decreased. This problem becomes larger the larger the system is and, in addition, increases with an increased number of repeaters. This problem is solved by registering only the sensors whose messages the repeater should forward in each repeater.

Accordingly, separation of sensors which are to be served by one or several repeaters is important in order to utilize the available radio channel space in a system in the best way possible.

The object of the present invention is to solve the above-mentioned problem and provide a method and a system for enabling simple and controlled registration of a subset of sensors in a subset of receiving units.

The method according to the invention is characterized in the steps:
- that at least one of the receivers is prepared for accepting wireless messages from at least one of the sensors by rendering the receiver susceptible to a first request from the sensor to be registered as a sensor from which the receiver accepts wireless messages, during a time slot which has a limited duration in time and is automatically closed after a predetermined period of time, after which time slot the receiver no longer accepts such a request;
- that the sensor is caused to transmit said request, comprising an identity code unique to the sensor, to the receiver within said time slot; and
- that the receiver registers the sensor, when receiving said request, as a sensor from which the receiver henceforth accepts wireless messages.

The system according to the invention is characterized in:
- that at least one of the receivers can be caused to accept wireless messages from at least one of the sensors by rendering the receiver susceptible to a first request from the sensor to be registered as a sensor from which the receiver accepts wireless messages, during a time slot which has a limited duration in time and is automatically closed after a predetermined period of time, after which time slot the receiver no longer accepts such a request;
- that the sensor can be caused to transmit said request, comprising an identity code unique to the sensor, to the receiver within said time slot; and
- that the receiver is arranged to register the sensor, when receiving said request, as a sensor from which the receiver henceforth accepts wireless messages.

Accordingly, according to the invention, the above-mentioned problem is solved by rendering receivers susceptible to registration of sensors only during a predetermined time slot, after which registration is no longer possible.

In the following, the invention will be described more closely with reference to attached patent drawings.

Figure 1 schematically shows a system for temperature monitoring according to the invention.

Figure 2 shows a time diagram, illustrating the registration of a sensor in a receiver in the system according to Figure 1.

Figure 3 shows a time diagram, illustrating the initiation of a manual measurement value report and deregistration of a sensor in a receiver, respectively, in the system according to Figure 1.

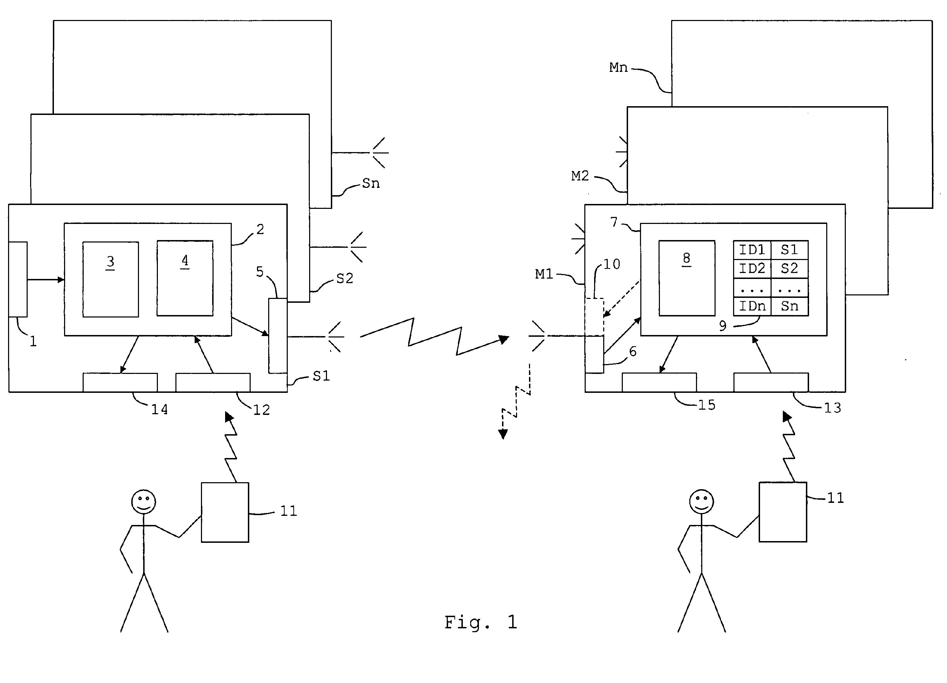

Figure 1 shows a system for monitoring the temperature in refrigerating and freezing units for foodstuff in a grocery store. The system comprises a plurality of temperature sensors S1-Sn and a plurality of receivers M1-Mn arranged to receive signals from the sensors S1-Sn. The number of receivers can be the same as or higher than the number of sensors, but usually the number of sensors is higher than the number of receivers.

The sensors S1-Sn are adapted to be placed in refrigerating and freezing units in the grocery store. Such refrigerating and freezing units can for example be cold storage or freezer storage rooms which are used continuously, but can also be temporary, portable cooling furniture, which only is used for a limited period of time, for example in connection with campaigns for selling a certain chilled product.

Each sensor S1-Sn has a unique RFID, ID1-IDn, which for example can be a serial number the sensor obtained when it was manufactured. Each sensor S1-Sn comprises a sensor body 1 for recording temperature. In other systems, the sensor body can be arranged to record other physical quantities, such as for example humidity, light-intensity, voltage or current consumption. The sensor also comprises a control unit 2, which in its turn comprises a processor 3 and a storage unit 4. The control unit 2 is preferably a so-called single-chip processor, i.e. a chip comprising both a processor portion and a storage portion. The RFID of the sensor is stored in the storage unit. The control unit 2 is arranged to receive measurement data from the sensor body 1 and to create messages comprising said measurement data and the RFID of the sensor. Furthermore, the sensor comprises a transmitter unit 5, which is arranged to receive said messages from the control unit 2 and send out these messages wirelessly as wireless signals to the receivers M1-Mn.

The receivers M1-Mn of the system include analyzing receivers, i.e. receivers which are arranged to receive and analyze messages from the sensors in order to analyze, for example, measurement data. Alternatively, the receivers M1-Mn can also include repeating receivers, or repeaters, i.e. receivers which are arranged to receive messages from the sensors in order to retransmit the messages with the original signal strength. Accordingly, a message can be received not only directly from a sensor, but also from a repeater, which in its turn may have received the message from a repeater. Alternatively, certain receivers can be both analyzing and repeating.

Regardless of the type of receiver, analyzing or repeating or both, each receiver M1-Mn comprises a receiving unit 6, which is arranged to receive the wireless signals form the sensors. Each receiver also comprises a control unit 7, which in its turn comprises a processor 8 and a storage unit 9. Also here, the control unit 7 is preferably a so-called single-chip processor, i.e. a chip comprising both a processor portion and a storage portion. The storage unit 9 comprises a table of registered sensors, i.e. a table comprising RFIDs for sensors from which the receiver accepts wireless messages for further processing.

When a message carried by a wireless signal is received by the receiving unit 6 of the receiver, the control unit 7 first performs a so-called CRC test in order to ensure that the message is not modified or corrupt. In this connection, CRC stands for Cyclic Redundancy Check. If the message is corrupt, the receiver takes no further action with respect to the message. After the CRC test, the control unit 7 checks whether the message originates from a registered sensor. This is preferably done by comparing the RFID of the message with the RFIDs being present in the storage unit 9 of the control unit 7. If the message originates from a non-registered sensor, the receiver takes no further action with respect to the message. If the message, on the other hand, originates from a registered sensor, the receiver processes the message further. If the receiver is an analyzing receiver, this further processing comprises a closer analysis of the received signal in the control unit 7. This analysis can for example consist in investigating the temperature measurement value in the message and to emit an alarm if the temperature measurement value exceeds a predetermined limit value. If the receiver is a repeating receiver, the further processing comprises a retransmission of the received message via a transmitter unit 10. This retransmission takes place with the normal strength. Before the retransmission, the repeater might possibly make certain additions to the message, said additions reflecting that the message has been repeated.

The system also comprises a portable activating unit 11 arranged to influence the transmitters and receivers, contactlessly and with a short range, with a digital activating signal. The range of the activating unit 11 is preferably within the interval 2-0.1 meters, which normally is sufficiently short to ensure that the activating unit 11 only influences one sensor or receiver at a time. For the reception of the activating signal, each sensor comprises a receiver unit 12 and, for the same purpose, each receiver comprises a receiver unit 13. In this connection, digital activating signal means that the respective receiver unit 12 and 13 only has to detect the presence of the activating signal, i.e. whether the activating unit 11 is in the vicinity of the respective receiver unit 12 and 13.

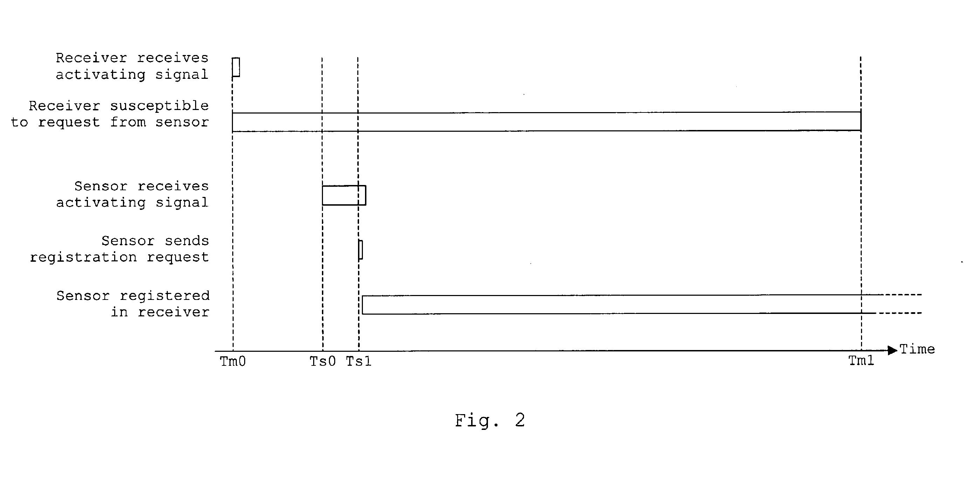

In the following, a method where a user registers one or a plurality of selected sensors in one or a plurality of selected receivers will be described more closely with reference to Figure 2. The table of registered sensors in the selected receivers is assumed to be empty initially, which means that the receivers initially are not analyzing incoming messages in any greater detail. Furthermore, the selected sensors are assumed to be inactive, i.e. they are not sending out any measurement reports.

Before the registration of the selected sensors can take place, each selected receiver has to be prepared so that it accepts registrations. This is done by means of the user bringing the activating unit 11 into the vicinity of each of the selected receivers. When the activating unit 11 is within a sufficiently short distance from the receiver unit 13 of the receiver M1, so that the receiver unit 13 detects the activating signal, the receiver unit 13 transmits a signal to the processor 8, which in its turn renders the receiver susceptible to a registration request from the sensors. However, the processor 8 is programmed in such a way that it, after a period of time of a predetermined and limited length, automatically returns the receiver to a mode where it is no longer susceptible to a registration request from the sensors. In other words, the detection of the activating signal by the receiver unit 13 initiates a time slot, which is limited in time and predetermined, during which the receiver is susceptible to a registration request from the sensors. In Figure 2, this is illustrated by means of the receiver unit 13 detecting the activating signal at the time Tm0. This detection initiates the time slot, extending between Tm0 and Tm1, when the receiver is susceptible to a registration request from the sensors. The length of this time slot is preferably within the interval 1-30 minutes, and most preferably within the interval 2-8 minutes, for example 4 minutes.

Thereafter, the remaining selected receivers are prepared in the same way as the first receiver, so that the respective time slots of all the selected receivers occur substantially simultaneously. It should be noted that a certain time shift between the time slots has to be allowed, since the user has to move between the selected receivers in order to initiate the time slot of the respective receivers.

The length of the time slot is preferably the same for all receivers in the system. However, the length of the time slot of each receiver can be individually adjustable, for example by means of a suitable reprogramming of the processor 8, so that the length of the time slot of certain receivers in the system can be set longer or shorter than the length of the corresponding time slots of other receivers.

After having prepared the selected receivers so that they accept a registration request from the sensors, and before the initially initiated time slot has been closed, the user manually brings the activating unit 11 in turns into the vicinity of the sensor or sensors which is/are desired to be registered in the prepared receivers, so that the activating unit 11 influences the receiver unit 12 of each of the sensors with an activating signal, whereupon the receiver unit 12 forwards this information to the processor 3 of the sensor S1. In order to cause the sensor S1 to send out a registration request, the user has to keep the activating unit 11 near the sensor during a first time period, having a predetermined length, so that the receiver unit 12 detects the activating signal without interruption during this first time period. Not until the processor 3, by means of the receiver unit 12, has detected that an activating signal has been present without interruption during this first time period, the processor 3 transmits a message to the transmitter unit 5, said message comprising a registration request from the sensor and the RFID of the sensor, whereupon the transmitter unit 5 sends out the message as a wireless signal. In Figure 2, this is illustrated by means of the receiver unit 12 first detecting the activating signal at the time Ts0. When the sensor S1 has detected the activating signal without interruption during the first time period, extending between Ts0 and Ts1, the sensor S1 sends out a registration request at the time Ts1. The user preferably receives a confirmation of the fact that the sensor S1 has sent out a registration request by a message to this effect being shown on a display 14 of the sensor S1.

The period of time required for a registration request, i.e. the time delay of the first time period, has a predetermined length, which preferably is within the interval 1-15 seconds, and which most preferably is within in the interval 4-8 seconds, for example 5 seconds.

Provided that that the time slots of the selected receivers still are open, the selected receivers will receive the registration request from the sensor S1 and register the sensor by adding the RFID of the sensor to its tables. The registration is preferably confirmed on a display 15 of the receiver. The display 15 can for example show the consecutive number which has been assigned to the registered sensor in the table of the receiver.

It is preferred that the sensor also is activated in connection with the sensor sending out a registration request, so that sensor S1 thenceforth generates automatic measurement value reports in accordance with instructions in the processor 3. In that way, the user can simultaneously register and activate the sensor by keeping the activating unit 11 near the sensor S1, so that the receiver unit 12 detects the activating signal without interruption during the above-mentioned first time period. To the extent that the sensor needs start instructions, also these are initiated in connection with the activation of the sensor. In this connection, it should be noted that even if a sensor already is registered, the user can reactivate the sensor, i.e. restart the sensor, by means of causing the sensor to send out a new registration request, so that it once again executes its start instruction. This is an advantage if new conditions arise, for example if the sensor is moved from a refrigerating unit to a freezing unit.

As long as the time slots of the selected receivers are open, the remaining selected sensors can be registered and activated in the same way.

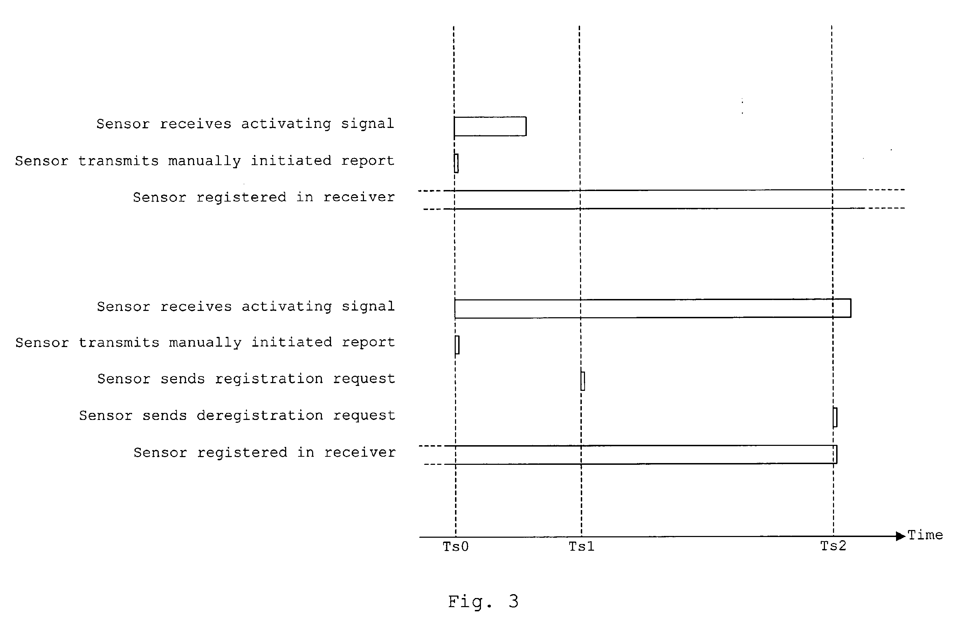

When a sensor has been registered and activated, a measurement value report can be initiated manually by means of the user bringing the activating unit 11 into the vicinity of the receiver unit 12, so that the receiver unit 12 detects the activating signal, as illustrated by the upper portion of Figure 3. The receiver unit detects the activating signal at the time Ts0, wherein the processor 3 of the sensor is caused to transmit a message to the transmitter unit 5, comprising an actual temperature measurement value from the sensor body, the RFID of the sensor and possibly a note to the effect that the report in question has been initiated manually. The transmitter unit 5 then sends out the message as a wireless signal. As a confirmation of the fact that the measurement value report has been transmitted, the measured measurement value can be shown on the display 14 of the sensor. The receivers in which the sensor is registered will receive this signal and process the signal in accordance with instructions in the processors 8 of the receivers or, if the receiver is a repeater, retransmit the message.

In order to deregister a sensor S1, the user manually brings the activating unit 11 into the vicinity of the sensor which is to be deregistered, so that the activating unit 11 influences the receiver unit 12 of the sensor with an activating signal without interruption during a second time period, which has a predetermined length and is longer than the above-mentioned first time period, i.e. the period of time for registration. A deregistration of a sensor is illustrated in the lower portion of Figure 3. The receiver unit detects the activating signal at the time Ts0, and when the receiver unit 12 has detected the activating signal without interruption during the time period Ts0-Ts2, which corresponds to said second time period, the control unit 2 transmits a message to the transmitter unit 5, said message comprising a deregistration request from the sensor and the RFID of the sensor, after which the transmitter unit 5 sends out the message as a wireless signal. The user preferably receives a confirmation of the fact that the sensor S1 has sent out a deregistration request by means of a message to this effect being shown on the display 14.

The second time period has a predetermined length, which preferably is within the interval 2-90 seconds, and which most preferably is within the interval 10-30 seconds, for example 25 seconds. It is universally true that the second time period, i.e. the period of time required for sending out a deregistration request, should be longer than the first time period, i.e. the period of time required for sending out a registration request.

All receivers in which the sensor is registered will receive the deregistration request from the sensor S1 and deregister the sensor. This is illustrated in the lower portion of Figure 3, where the sensor ceases to be registered shortly after the sensor has sent out its deregistration request. Preferably, the deregistration takes place in such a way that the receiver, in the table of registered sensors, retains the RFID of the sensor in question in the table, but marks this RFID as deregistered. The deregistration is preferably acknowledged by a message to this effect being shown on the display 15 of the respective receiver.

Incidentally, it can be said that before the sensor sends out its deregistration request, the sensor will first send out a manually initiated measurement value report and then a registration request, as is evident from Figure 3. However, this does not influence the deregistration of the sensor.

It is preferred that the sensor is also deactivated in connection with the sensor sending out a deregistration request, so that the automatic measurement value reporting activated in connection with the registration is discontinued. In that way, the user can simultaneously deregister and deactivate the sensor by keeping the activating unit 11 near the sensor S1, so that the receiver unit 12 detects the activating signal without interruption during the above-mentioned second time period.

The sensor is preferably programmed to automatically send out a deregistration request and to simultaneously deactivate itself if it discovers that it no longer can function reliably, for instance if it discovers that its battery is running out.

Each receiver in the system is preferably programmed in such a way that it does not have to be prepared for receiving a registration request when reregistering a previously registered sensor. This takes place in such a way that the receiver, when it receives a registration request from a sensor, checks whether the RFID of the sensor in question is present in the table of the receiver. If the RFID of the sensor in question is present in the table, but is marked as deregistered, the receiver reregisters the sensor by returning the status of the sensor to registered in the table. If the RFID of the sensor in question is not present in the table, the receiver registers the sensor only if the receiver first has been prepared for receiving a registration request, as has been described previously. The advantage with this method is that the user, simultaneously and in a simple and reliable way, can reregister a temporarily deregistered sensor in all the receivers where it previously was registered, and this without any risk of registering the sensor in receivers where it previously was not registered.

Accordingly, depending on how long the user keeps the activating unit 11 near a sensor, i.e. depending on whether the time delay of the activating signal is short, medium-long or long, three different activation cases may occur:
1. If the time delay of the activating signal is short, for example shorter than 5 seconds, a manual measurement value report is initiated, provided that sensor has been previously activated.
2. If the time delay of the activating signal is medium-long, for example longer than 5 seconds but shorter than 25 seconds, a registration request from the sensor is initiated. Furthermore, the sensor is activated, so that it automatically and in accordance with instructions programmed into the processor 3 automatically generates measurement value reports.
3. If the time delay of the activating signal is long, for example longer than 25 seconds, a deregistration request from the sensor is initiated. Furthermore, the sensor is preferably deactivated, so that possible automatically generated measurement value reports are discontinued.

The activating unit 11 and the receiver units 12 and 13 can be realized in a number of different ways. The activating unit 11 can for example comprise a magnet which is arranged to interact with a magnetically actuatable element of the receiver unit 12 and 13, respectively. Alternatively, a Hall effect sensor with associated electronics can be utilized. Alternatively, the activating unit 11 can comprise a light or sound generating unit arranged to emit light, for example infrared light, or sound, and the receiver units 12 and 13 can comprise a photosensitive unit or a microphone for detecting the light and sound, respectively.

Purely theoretically, a push button of the sensors and receivers, respectively, could be used instead of an activating unit and a receiver unit. For practical reasons, however, this is out of the question in most cases, since at least the sensors have to be completely encapsulated in most situations.

The previously mentioned automatic measurement value reports can, for example, include that the reporting sensor sends out a message when any permanent, significant change of the temperature occurs, for example when the temperature value has changed enough or when a small, but permanent change of the temperature value has been discovered. In all reporting, the processor 3 includes the RFID of the transmitter in the signal being sent out, so that the receivers in the system can determine whether they should accept and process the received message.

The invention enables a definite logical and structural structure of sensor networks with subgroups of sensors and receivers, where said subgroups can be partially overlapping and where the sensors and receivers of the subgroups can be located physically close to each other. The invention also makes it possible to easily, rapidly and definitely register and deregister sensors in repeaters. Furthermore, the system for registration and deregistration of sensors according to the invention is based on unidirectional single-channel communication between sensors and receivers. Accordingly, the system makes the smallest possible demands on the wireless equipment included in the system. Thus, advanced and expensive technology, which is based on bidirectional and/or multi-channel communication between the sensors and the receiving units, is avoided. The simple signalling between the activating unit and the receiving units of the sensors and the receivers, where the duration of a digital signal, i.e. the time delay of the activating signal, is an information carrier, enables a simple and robust system, which is suitable for difficult environments and conditions. Accordingly, the system according to the invention makes small demands on the included equipment.

In the foregoing, the invention has been described starting from a system for temperature monitoring of foodstuff in refrigerating and freezing units. It is appreciated, however, that the invention is applicable to other sensor systems. It is also appreciated that variants, and other embodiments than the one described in the foregoing, are possible within the scope of the invention.

## Claims

1. A method in a system comprising a plurality of sensors (S1-Sn), on one hand, for measuring at least one physical quantity and wireless forwarding of measurement values in the form of wireless messages, and a plurality of receivers (M1-Mn), on the other hand, for receiving these wireless messages,
**characterized in** the steps:
- that at least one of the receivers (M1) is prepared for accepting wireless messages from at least one of the sensors (S1) by rendering the receiver (M1) susceptible to a first request from the sensor (S1) to be registered as a sensor from which the receiver (M1) accepts wireless messages, during a time slot (Tm0-Tm1), which has a limited duration in time and is automatically closed after a predetermined period of time, after which time slot (Tm0-Tm1) the receiver (M1) no longer accepts such a request;
- that the sensor (S1) is caused to transmit said request, comprising an identity code unique to the sensor (S1), to the receiver (M1) within said time slot (Tm0-Tm1); and
- that the receiver (M1) registers the sensor (S1), when receiving said request, as a sensor from which the receiver (M1) henceforth accepts wireless messages.

2. The method according to claim 1, **characterized in that** the time slot (Tm0-Tm1) is initiated by manually causing a portable activating unit (11) to interact with a receiver unit (13) of the receiver (M1), and that the sensor (S1), within said time slot (Tm0-Tm1), is caused to transmit said request to the receiver (M1) by manually causing the activating unit (11) to interact with a receiver unit (12) of the sensor (S1).

3. The method according to claim 2, **characterized in that** said interaction between the activating unit (11) and the receiver unit (12) of the sensor (S1) comprises bringing the activating unit (11) into the vicinity of the sensor (S1) in order to influence the receiver unit (12) of the sensor (S1) with an activating signal without interruption during a first time period (Ts0-Ts1), having a length which is limited in time and predetermined.

4. The method according to claim 3, **characterized in that** the activating signal being present without interruption during the first time period also activates automatic measurement value reporting from the sensor (S1) in accordance with instructions programmed into a processor (3) of the sensor (S1).

5. The method according to any one of claims 1-4,
**characterized in** the further step:
- that a manual reporting of measurement values is initiated in said at least one sensor (S1) by means of once again causing the activating unit (11) to influence the receiver unit (12) of the sensor (S1) with an activating signal.

6. The method according to any one of claims 1-5,
**characterized in** the further steps:
- that the sensor (S1) is caused to transmit a second request, comprising the identity code unique to the sensor (S1), to the receiver (M1) to be deregistered as a sensor from which the receiver (M1) accepts measurement values by manually causing the activating unit (11) to interact with the receiver unit (12) of the sensor (S1); and
- that the receiver (M1) deregisters the sensor (S1), when receiving said second request, so that the receiver (M1) no longer accepts wireless messages from the sensor (S1).

7. The method according to claim 6, **characterized in that** said interaction between the activating unit (11) and the receiver unit (12) of the sensor (S1) in connection with the deregistration comprises bringing the activating unit (11) into the vicinity of the sensor (S1) in order to influence the receiver unit (12) of the sensor (S1) with an activating signal without interruption during a second time period (Ts0-Ts2), having a length which is limited in time and predetermined and longer than said first time period (Ts0-Ts1).

8. The method according to claim 7, **characterized in that** the activating signal being present without interruption during the second time period (Ts0-Ts2) also deactivates the previously activated automatic measurement value reporting from the sensor (S1).

9. The method according to any one of claims 6-8,
**characterized in that** said registration of the sensor (S1) in the receiver (M1) comprises registering the unique identity code of the sensor (S1) in a storage unit (9) of the receiver (M1), and that said deregistration of the sensor (S1) in the receiver (M1) comprises marking the identity code of the sensor (S1) being registered in the storage unit (9) of the receiver (M1) as deregistered.

10. The method according to claim 9, **characterized in**
- **that** the sensor (S1) is caused to transmit a third request, comprising the identity code unique to the sensor (S1), to the receiver (M1) to be reregistered as a sensor from which the receiver (M1) accepts measurement values by manually causing the activating unit (11) to interact with the receiver unit (12) of the sensor (S1), said interaction comprising bringing the activating unit (11) into the vicinity of the sensor (S1) in order to influence the receiver unit (12) of the sensor (S1) with an activating signal without interruption during a third time period, having a length in time which is limited and predetermined, and equal to the length of said first time period (Ts0-Ts1); and
- **that** the receiver (M1) reregisters the sensor (S1), when receiving said third request, and provided that the identity code of the sensor already is present in the storage unit (9) of the receiver (M1) and is marked as deregistered therein, so that the receiver (M1) once again accepts wireless messages from the sensor (S1).

11. A system comprising a plurality of sensors (S1-Sn), on one hand, for measuring at least one physical quantity and wireless forwarding of measurement values in the form of wireless messages, and a plurality of receivers (M1-Mn), on the other hand, for receiving these wireless messages, **characterized in:**
- **that** at least one of the receivers (M1) can be caused to accept wireless messages from at least one of the sensors (S1) by rendering the receiver (M1) susceptible to a first request from the sensor (S1) to be registered as a sensor from which the receiver (M1) accepts wireless messages, during a time slot (Tm0-Tm1) which has a limited duration in time and is automatically closed after a predetermined period of time, after which time slot (Tm0-Tm1) the receiver (M1) no longer accepts such a request;
- **that** the sensor (S1) can be caused to send said request, comprising an identity code unique to the sensor (S1), to the receiver (M1) within said time slot (Tm0-Tm1); and
- **that** the receiver (M1) is arranged to register the sensor (S1), when receiving said request, as a sensor from which the receiver (M1) henceforth accepts wireless messages.
